## Europäisches Patentamt

## European Patent Office

## Office européen des brevets

(11) Veröffentlichungsnummer: **0 008 138**
A1

# EUROPÄISCHE PATENTANMELDUNG

(21) Anmeldenummer: 79200371.7

(22) Anmeldetag: 06.07.79

(51) Int. Cl.³: **H 02 B 1/18**

(30) Priorität: 28.07.78 DE 2833127

(43) Veröffentlichungstag der Anmeldung: 20.02.80
Patentblatt 80/4

(84) Benannte Vertragsstaaten: AT CH GB IT NL

(71) Anmelder: BBC Aktiengesellschaft Brown,Boveri &
Cie, CH-5401 Baden (CH)

(72) Erfinder: Krämer, Wilhelm, Ing., Hegelstrasse 2,
D-6902 Sandhausen (DE)

(54) Kühlvorrichtung für gekapselte Schaltfelder.

(57) In einem gekapselten elektrischen Schaltfeld soll die Stromwärme mit einfachen Mitteln abgeführt und dabei gleichzeitig verhindert werden, daß Staub und Luftfeuchtigkeit eindringen können. Dies wird dadurch erreicht, daß Mittel zum Verwirbeln von im Inneren des Schaltfeldes befindlicher Luft vorgesehen sind. Diese Luft wird im geschlossenen Kreislauf an den Innenseiten der metallischen Gehäuseoberfläche des Schaltfeldes entlang geführt und gibt die aufgenommene Stromwärme über das Gehäuse nach außen ab. Weist das Schaltfeld geschottete Räume (1, 2, 3) auf, ist es besonders vorteilhaft, in den Luftkreislauf am Ort der Schottungsraumwände Innenraumsperren (19) anzuordnen.

- 1 -

"Kühlvorrichtung für gekapselte Schaltfelder"

Die Erfindung bezieht sich auf eine Kühlvorrichtung für gekapselte Schaltfelder, insbesondere für gekapselte und in einzelne Schotträume unterteilte Schaltfelder für Mittelspannungs-Schaltanlagen.

Elektrische Schaltfelder sind Bestandteil von Niederspannungs- und Mittelspannungs-Schaltanlagen und dienen der Energieverteilung auf diesen Spannungsebenen.

Bei Mittelspannungs-Schaltanlagen unterscheidet man zwischen Anlagen mit fest eingebauten Schaltgeräten in den Bauarten offen oder gekapselt, und Anlagen mit ausfahrbaren Schaltgeräten (Ausfahrfelder) in den Bauarten gekapselt sowie

0008138

gekapselt und geschottet. Durch vollständiges Umhüllen der Schaltfelder mit Stahlblech erhält man die gekapselte Schaltanlage. Unterteilt man das gekapselte Schaltfeld in einzelne Räume, zum Beispiel Sammelschienenraum, Leistungsschalterraum, Kabelanschlußraum, so spricht man von einem gekapselten und geschotteten Schaltfeld.

Wegen der vollständigen Umhüllung der Schaltfelder mit Stahlblech sowie ihrer Unterteilung im Innern in einzelne Schotträume, ist es notwendig, Maßnahmen zur Abfuhr der Stromwärmeverluste vorzusehen.

Es sind Schaltfelder bekanntgeworden, deren Stromwärmeverluste mit Hilfe der natürlichen Kühlung über im unteren und oberen Bereich des Schaltgehäuses angeordnete Luftschlitze abgeführt werden.

Weiterhin sind Schaltfelder bekanntgeworden, bei denen die Stromwärmeverluste über die Gehäuseoberfläche des Stahlblechgehäuses an die Atmosphäre abgegeben werden.

Beide Maßnahmen sind aufgrund ihrer Wirkungsweise in ihrer Leistungsfähigkeit sehr begrenzt und eignen sich deshalb nicht für höhere Kühlanforderungen.

Weiterhin ist es nachteilig, daß durch die Lufteintrittsöffnungen um Schaltfeldgehäuse Staub- und Luftfeuchtigkeit eindringen und an den Geräten und anderen Bauteilen Schäden hervorrufen können.

Der Erfindung liegt die Aufgabe zugrunde, mit einfachen Mitteln innerhalb des Schaltfeldes ein geschlossenes und intensiv wirkendes Kühlsystem zu schaffen.

0008138

Diese Aufgabe wird erfindungsgemäß dadurch gelöst, daß Mittel vorgesehen sind, mit denen zur Abfuhr der Stromwärmeverluste die Luft im Schaltfeld verwirbelt und dabei entlang den Innenseiten der metallischen Gehäuseoberfläche des Schaltfeldes umgewälzt wird.

Zweckmäßige Weiterbildungen der Erfindung können darin bestehen, daß zum Durchtritt des Luftstromes und zur Verhinderung der Ausbreitung eines Störlichtbogens durch den Luftstrom in den Wänden der Schotträume Ionensperren angeordnet sind sowie darin, daß zur verbesserten Verwirbelung und Umwälzung der Luft im Schaltfeld Leitvorrichtungen angeordnet sind.

Die mit der Erfindung erzielten Vorteile bestehen insbesondere darin, daß mit Hilfe der Wärmeströmung (Wärmekonvektion) und der Wärmeleitung eine intensive Kühlung im Schaltfeldinneren und damit auch der Strombahnen der eingebauten Schaltgeräte und anderen Betriebsmittel erreicht wird, so daß diese bei gleichem Querschnitt eine höhere Stromtragfähigkeit aufweisen.

Während des Kühlvorganges werden Orte höherer und niederer Temperatur im Innern der Schaltanlage durch die Umwälzung der Luft ausgeglichen und es entsteht weiterhin ein guter Wärmekontakt mit der metallischen Gehäuseoberfläche von wo aus die Wärme an die Atmosphäre abgeführt wird.

Das geschlossene Kühlsystem besitzt ferner den Vorteil, daß kaum Staubteilchen in das Schaltfeldinnere eindringen können, da keine Luft von außen angesaugt wird.

- 4 - 606/78

Die Erfindung ist anhand von zwei Ausführungsbeispielen in der Zeichnung dargestellt, die im folgenden näher beschrieben werden.

Es zeigt

Fig. 1    einen Querschnitt durch ein gekapseltes und   geschottetes Schaltfeld mit Doppelsammelschienen;

Fig. 2    eine Seitenansicht einer Ionensperre in schematischer Darstellung;

Fig. 3    ein Detail der Seitenansicht der in Fig. 3 gezeigten Ionensperre;

Fig. 4    ein Detail in axialer Richtung der in Fig. 2 gezeigten Ionensperre.

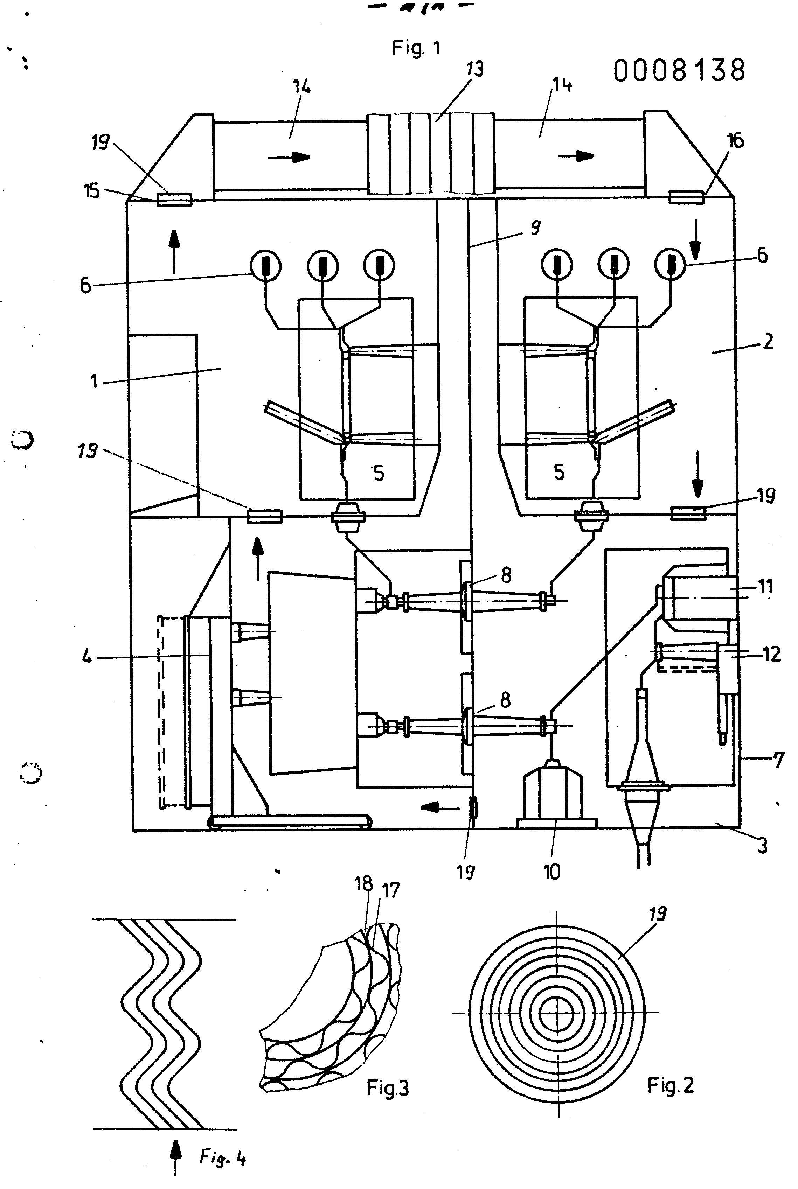

In Figur 1 ist ein in Stahlblech gekapseltes Schaltfeld zu erkennen, mit Doppelsammelschienen, wobei das Schaltfeld in die Sammelschienenräume 1,2 und einen Kabelanschlußraum 3 abgeschottet ist. Ein Leistungsschalter 4 kann mit seinem einen Schaltpol über Sammelschienen-Trennschalter 5 wahlweise mit einer der beiden Sammelschienen 6 verbunden werden, während sein anderer Schaltpol mit einem Kabelendverschluß 7 verbunden ist. Mit 8 sind bolzenförmige Stromdurchführungen in einer Trennwand 9 benannt. Ein Spannungswandler ist mit 10, ein Stromwandler mit 11 und ein Erdungsschalter mit 12 gekennzeichnet.

Auf dem Dach des Schaltfeldes ist ein Lüfter 13 angeordnet, der über einen Luftkanal 14 so mit dem Schaltfeld verbunden ist, daß durch eine Öffnung 15 Luft aus dem Schaltfeld abgesaugt und durch eine Öffnung 16 wieder in das Schaltfeldinnere zurückgeführt wird.

Weitere Öffnungen zum Durchtritt für den Luftstrom sind in den Schottwänden bzw. in der Trennwand 9 angeordnet und zur Verhinderung der Ausbreitung eines Strörlichtbogens durch den Luftstrom mit Ionensperren 19 versehen. Bei eingeschaltetem Lüfter entsteht so eine Umlaufströmung der Luft (Pfeilrichtung), wobei diese auf ihrem Weg zahlreiche Strömungshindernisse in den Einbaugeräten vorfindet und dadurch eine Verwirbelung der Luft stattfindet. Desweiteren wird die Luft durch die Ionensperren an der Innenseite der metallischen Gehäuseoberfläche des Schaltfeldes entlanggeführt, so daß ein Wärmetausch über die Gehäuseoberfläche an die atmosphärische Luft stattfindet. Zur verbesserten Verwirbelung und Umwälzung der Luft können im Schaltfeld Leitvorrichtungen vorgesehen werden. Weiterhin ist es möglich, den Lüfter über einen Thermostaten erst ab einer bestimmten Temperatur im Innern des Schaltfeldes in Betrieb zu setzen.

Die Ionensperren bestehen aus einem gewellten Metallband 17, das unter Zwischenfügen eines weiteren ebenen Metallbandes 18 spiralförmig aufgewickelt ist.

Es ist weiterhin möglich, der Ionensperre auch in axialer Richtung einen wellenförmigen Verlauf (Fig. 4) zu geben. Der Pfeil deutet die Lufteintrittsrichtung an.

- 1 -

Ansprüche

1. Kühlvorrichtung für gekapselte Schaltfelder, insbesondere für gekapselte und in einzelne Schotträume unterteilte Schaltfelder für Mittelspannungs-Schaltanlagen, dadurch gekennzeichnet, daß Mittel vorgesehen sind sind, mit denen zur Abfuhr der Stromwärmeverluste die Luft im Schaltfeld verwirbelt und dabei entlang den Innenseiten der metallischen Gehäuseoberfläche des Schaltfeldes umgewälzt wird.

2. Kühlvorrichtung nach Anspruch 1, dadurch gekennzeichnet, daß zur Verwirbelung und Umwälzung der Luft mindestens ein Lüfter im Schaltfeld vorgesehen ist.

3. Kühlvorrichtung nach Anspruch 1, dadurch gekennzeichnet, daß ein Lüfter (13) außerhalb des Schaltfeldes angeordnet und über einen Verbindungskanal (14) mit dem Schaltfeldinnern verbunden ist.

4. Kühlvorrichtung nach einem der Ansprüche 1 bis 3, dadurch gekennzeichnet, daß zum Durchtritt des Luftstromes und zur Verhinderung der Ausbreitung eines Störlichtbogens durch den Luftstrom in den Wänden der Schotträume Ionensperren (19) angeordnet sind.

0008138

606/78

5. Kühlvorrichtung nach Anspruch 4, dadurch gekennzeichnet, daß die Ionensperre (19) aus einem gewellten und spiralförmig aufgewickelten Metallband (17) besteht.

6. Kühlvorrichtung nach Anspruch 5, dadurch gekennzeichnet, daß die Metallbänder auch in axialer Richtung der Ionensperre (19) gewellt sind.

7. Kühlvorrichtung nach Anspruch 6, dadurch gekennzeichnet, daß die Ionensperre aus mehreren, aneinandergereihten, spiralförmig aufgewickelten Metallbändern besteht.

8. Kühlvorrichtung nach einem der Ansprüche 1 bis 7, dadurch gekennzeichnet, daß zur verbesserten Verwirbelung und Umwälzung der Luft im Schaltfeld Leitvorrichtungen angeordnet sind.

## Fig. 1

Fig. 1

Fig.3

Fig.2

Fig. 4

**Europäisches Patentamt**

**EUROPÄISCHER RECHERCHENBERICHT**

Nummer der Anmeldung

0008138

EP 79 20 0371

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 1 522 361 (KOPPERS CO.)<br>* Seite 2 * | 1,2 |
| | -- | |
| | DE - B - 1 063 242 (LICENTIA)<br>* Spalte 2, Zeilen 23-48 * | 1-3 |
| | -- | |
| | FR - A - 787 348 (ATELIERS DE CONSTRUCTIONS ELEC. DE DELLE)<br>* Seite 1, Zeile 41 bis Seite 2, Zeile 13 * | 5-7 |
| | -- | |
| A | US - A - 3 364 838 (GENERAL ELECTRIC)<br>* Figur 1 * | 1,8 |
| | ---- | |

**KLASSIFIKATION DER ANMELDUNG (Int.Cl. 3)**

H 02 B   1/18

**RECHERCHIERTE SACHGEBIETE (Int. Cl. 3)**

H 02 B   1/18
H 01 H  33/57
         9/52
H 05 K   7/20

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-11-1979 | DAILLOUX |

EPA form 1503.1   06.78